# EUROPÄISCHE PATENTANMELDUNG

(11) **EP 3 934 064 A1**
(43) Veröffentlichungstag der Anmeldung: **05.01.2022**
(21) Anmeldenummer: 21173584.0
(22) Anmeldetag: 12.05.2021
(51) Int. Cl.: H02K 1/28, H02K 1/30, H02K 5/173

(54) **ROTOR FÜR ELEKTRISCHE MASCHINE MIT VERBESSERTER AXIALSICHERUNG DES ROTORBLECHPAKETS SOWIE ELEKTRISCHE MASCHINE UND FAHRZEUG MIT EINEM SOLCHEN ROTOR**

(30) Priorität: 30.06.2020 DE 102020117219
(71) Anmelder: Valeo Siemens eAutomotive Germany GmbH, 91056 Erlangen (DE)
(72) Erfinder: Schlereth, Alexander, 97616 Bad Neustadt a.d.Saale (DE)

(57) **Zusammenfassung**

Es wird ein Rotor (1, 1a..1f) für eine elektrische Maschine (14) angegeben, welcher eine Rotorwelle (2, 2a..2f) umfasst, ein Rotorblechpaket (3), das mit einer Presspassung auf der Rotorwelle (2, 2a..2f) sitzt, einen ersten Rotorhalter (5a..5c), welcher benachbart zum Rotorblechpaket (3) auf einer ersten Seite desselben angeordnet ist, und einen zweiten Rotorhalter (6a..6d), welcher benachbart zum Rotorblechpaket (3) auf einer zweiten, gegenüberliegenden Seite desselben angeordnet ist. Weiterhin umfasst der Rotor einen ersten Wellensicherungsring (7), der in einer ersten Nut der Rotorwelle (2, 2a..2f) sitzt und das Rotorblechpaket (3) axial sichert. Zudem wird eine elektrische Maschine mit einem Stator (15) und einem Rotor (1, 1a..1f) der genannten Art angegeben sowie ein Fahrzeug (16) mit wenigstens zwei Achsen, von denen wenigstens eine angetrieben ist. Der Antrieb des Fahrzeugs (16) erfolgt zumindest teilweise oder zeitweise durch die elektrische Maschine (14) der oben genannten Art.

## Beschreibung

### TECHNISCHES GEBIET

Die Erfindung betrifft einen Rotor für eine elektrische Maschine, welcher eine Rotorwelle umfasst, ein Rotorblechpaket, das mit einer Presspassung auf der Rotorwelle sitzt (und mehrere Rotorbleche aufweist), einen ersten Rotorhalter, welcher benachbart zum Rotorblechpaket auf einer ersten Seite desselben angeordnet ist, sowie einen zweiten Rotorhalter, welcher benachbart zum Rotorblechpaket auf einer zweiten, gegenüberliegenden Seite desselben angeordnet ist. Weiterhin betrifft die Erfindung eine elektrische Maschine mit einem Stator und einem Rotor der oben genannten Art, welcher gegenüber dem Stator um die Rotationsachse des Rotors drehbar gelagert ist. Schließlich betrifft die Erfindung ein Fahrzeug mit wenigstens zwei Achsen, von denen wenigstens eine angetrieben ist, wobei der besagte Antrieb zumindest teilweise oder zeitweise durch die elektrische Maschine der oben genannten Art erfolgt.

### STAND DER TECHNIK

Bei der Montage des Rotorblechpakets auf der Rotorwelle werden die Rotorbleche mit einer Pressvorrichtung aufeinandergedrückt, sodass zwischen den Rotorblechen nach Möglichkeit keine oder nur kleine Luftspalte entstehen. Aufgrund unweigerlicher Abweichungen von der Ebenenform wirken die Rotorbleche als Federpaket. Einem Auffächern wird durch entsprechende Wahl der Presspassung des Rotorblechpakets auf der Rotorwelle entgegengewirkt. Im Betrieb der elektrischen Maschine kann es im Laufe der Zeit dennoch zu einem Auffächern des Rotorblechpakets beziehungsweise zu einem Auseinanderwandern der Rotorbleche kommen.

### OFFENBARUNG DER ERFINDUNG

Eine Aufgabe der Erfindung ist es daher, einen verbesserten Rotor, eine verbesserte elektrische Maschine sowie ein verbessertes Fahrzeug anzugeben. Insbesondere soll ein (speziell im Betrieb der elektrischen Maschine auftretendes) Auffächern des Rotorblechpakets beziehungsweise Auseinanderwandern der Rotorbleche wirkungsvoll verhindert werden.

Die Aufgabe der Erfindung wird mit einem Rotor der eingangs genannten Art gelöst, welcher einen ersten Wellensicherungsring umfasst, der in einer ersten Nut der Rotorwelle sitzt und das Rotorblechpaket axial sichert.

Die Aufgabe der Erfindung wird auch mit einer elektrischen Maschine mit einem Stator und einem Rotor der oben genannten Art gelöst, wobei der Rotor gegenüber dem Stator um die Rotationsachse des Rotors drehbar gelagert ist.

Schließlich wird die Aufgabe der Erfindung mit einem Fahrzeug mit wenigstens zwei Achsen gelöst, wobei wenigstens eine der Achsen angetrieben ist und wobei der besagte Antrieb zumindest teilweise oder zeitweise durch die elektrische Maschine der oben genannten Art erfolgt.

Mit Hilfe der vorgeschlagenen Maßnahmen kann ein Auffächern des Rotorblechpakets beziehungsweise ein Auseinanderwandern der Rotorbleche wirksam vermieden werden. Die beiden Rotorhalter dienen dabei dazu, die Axialkräfte auch von äußeren Radialbereichen, in denen die Wellensicherungsringe alleine keine Wirkung hätten, abzuleiten. Die Wellensicherungsringe werden allgemein so gewählt, dass sie einerseits die entstehenden Axialkräfte abfangen können, andererseits bei der Nenndrehzahl der elektrischen Maschine nicht abheben, beziehungsweise sich ablösen. Beispielsweise kann der Wellensicherungsring nach DIN 471 ausgeführt sein.

Die Rotorhalter sind hinsichtlich ihrer Form nur wenig eingeschränkt, solange sie auf dem Rotorblechpaket weit nach außen reichen. Unter dem Begriff "weit außen" kann im gegebenen Zusammenhang insbesondere verstanden werden, dass der größte Durchmesser, auf dem der erste oder zweite Rotorhalter das Rotorblechpaket berührt, zumindest das 0,7-fache des Außendurchmessers des Rotorblechpakets beträgt. Insbesondere können die Rotorhalter scheibenförmig, radförmig (mit Speichen) oder sternförmig sein.

Günstig ist es, wenn der Rotor einen zweiten Wellensicherungsring aufweist, der in einer zweiten Nut der Rotorwelle sitzt und das Rotorblechpaket axial sichert, wobei die zweite Nut in Bezug auf das Rotorblechpaket gegenüberliegend zur ersten Nut angeordnet ist. Auf diese Weise wird das Blechpaket beidseitig durch Wellensicherungsringe axial gesichert. Denkbar ist es aber auch, dass der Rotor eine Wellenschulter auf der Rotorwelle aufweist, welche das Rotorblechpaket axial sichert. Auf diese Weise wird das Blechpaket auf einer Seite durch die Wellenschulter und auf der anderen Seite durch den ersten Wellensicherungsring axial gesichert.

Insbesondere können der erste Wellensicherungsring und die erste Nut benachbart zum ersten Rotorhalter gegenüberliegend zum Rotorblechpaket angeordnet sein und/oder der zweite Wellensicherungsring und die zweite Nut können benachbart zum zweiten Rotorhalter gegenüberliegend zum Rotorblechpaket angeordnet sein. Auch die Wellenschulter kann benachbart zum ersten Rotorhalter oder benachbart zum zweiten Rotorhalter angeordnet sein.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn der erste Wellensicherungsring und/oder der zweite Wellensicherungsring auf einem Wellenabsatz der Rotorwelle angeordnet ist/sind. Bei sehr hohen Drehzahlen der elektrischen Maschine kann es vorkommen, dass die Wellensicherungsringe auf dem Wellendurchmesser der Rotorwelle, auf dem das Rotorblechpaket sitzt, abheben beziehungsweise sich ablösen würden. Aus diesem Grund kann es zweckmäßig sein, die Wellensicherungsringe auf einem Wellenabsatz der Rotorwelle mit geringerem Durchmesser anzuordnen. Die Abhebedrehzahl wird durch diese Maßnahme angehoben.

Vorteilhaft ist es zudem, wenn der Rotor ein erstes (Dreh)lager aufweist, dessen Innenring benachbart zum ersten Rotorhalter gegenüberliegend zum Rotorblechpaket angeordnet ist, wobei der erste Wellensicherungsring außenseitig beim Innenring des ersten Lagers angeordnet ist. Vorteilhaft ist es weiterhin, wenn der Rotor ein zweites (Dreh)lager aufweist, dessen Innenring benachbart zum zweiten Rotorhalter gegenüberliegend zum Rotorblechpaket angeordnet ist, wobei der zweite Wellensicherungsring außenseitig beim Innenring des zweiten Lagers angeordnet ist und wobei das zweite Lager in Bezug auf das Rotorblechpaket gegenüberliegend zum ersten Lager angeordnet ist. Bei dieser Bauform wird der Innenring des ersten Lagers und/oder der Innenring des zweiten Lagers gemeinsam mit dem Rotorblechpaket axial gesichert. Auf diese Weise wird eine Mehrfachfunktion erreicht. Zum einen werden sowohl das Rotorblechpaket als auch die Lager axial gesichert, zum anderen sitzen die Wellensicherungsringe auf relativ kleinen Durchmessern, wodurch die Abhebedrehzahl derselben angehoben wird. Außerdem ist diese Bauform besonders kompakt. Da die Innenringe der Lager bei dieser Bauform axial fixiert sind, ist ein eventuell nötiges Loslager über den Außenring eines der Lager zu bewerkstelligen. Generell können die Lager als Wälzlager oder Gleitlager ausgeführt sein.

Günstig ist es auch, wenn eine erste Distanzscheibe oder Distanzhülse zwischen dem Innenring des ersten Lagers und dem ersten Rotorhalter und/oder eine zweite Distanzscheibe oder Distanzhülse zwischen dem Innenring des zweiten Lagers und dem zweiten Rotorhalter angeordnet ist. Dadurch können sich die Außenringe der Lager frei drehen und streifen nicht an den Rotorhaltern, wenn diese keine entsprechenden Absätze beziehungsweise Freistellungen aufweisen.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand des in der schematischen Figur der Zeichnung angegebenen Ausführungsbeispiels näher erläutert. Es zeigt dabei:
- Figur 1: einen Rotor für eine elektrische Maschine, bei dem das Rotorblechpaket mit zwei Wellensicherungsringen axial gesichert ist;
- Figur 2: einen Rotor für eine elektrische Maschine, bei dem das Rotorblechpaket mit einem Wellensicherungsring und einer Wellenschulter der Rotorwelle axial gesichert ist;
- Figur 3: einen Rotor für eine elektrische Maschine, bei dem das Rotorblechpaket mit zwei Wellensicherungsringen axial gesichert ist, welche auf einem Wellenabsatz sitzen;
- Figur 4: einen Rotor ähnlich wie in Fig. 3, bei dem das Rotorblechpaket jedoch mit einem Wellensicherungsring und einer Wellenschulter der Rotorwelle axial gesichert ist;
- Figur 5: einen Rotor für eine elektrische Maschine, bei dem das Rotorblechpaket gemeinsam mit den Wälzlagern des Rotors mit zwei Wellensicherungsringen axial gesichert ist;
- Figur 6: einen Rotor ähnlich wie in Fig. 5, bei dem das Rotorblechpaket jedoch mit einem Wellensicherungsring und einer Wellenschulter der Rotorwelle axial gesichert ist;
- Figur 7: einen Rotor ähnlich wie in Fig. 5, jedoch mit Distanzscheiben zwischen den Rotorhaltern und den Wälzlagern und
- Figur 8: eine elektrische Maschine mit einem Rotor der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlich Ausführungsformen mit gleichen Bezugszeichen beziehungsweise gleichen Bauteilbezeichnungen versehen werden, gegebenenfalls mit unterschiedlichen Indizes. Die in der Beschreibung enthaltene Offenbarungen eines Bauteils kann sinngemäß ein anderes Bauteil mit gleichem Bezugszeichen beziehungsweise gleicher Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

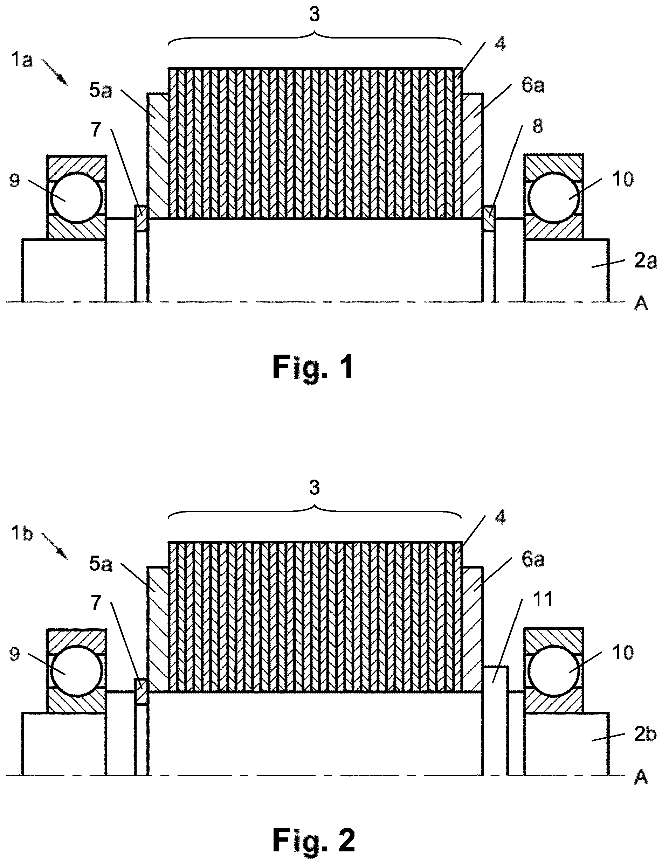

Fig. 1 zeigt einen Rotor 1a für eine elektrische Maschine, welcher eine Rotorwelle 2a umfasst, ein Rotorblechpaket 3, das eine Vielzahl an Rotorblechen 4 umfasst und mit einer Presspassung auf der Rotorwelle 2a sitzt, und einen ersten Rotorhalter 5a, welcher benachbart zum Rotorblechpaket 3 auf einer ersten Seite desselben angeordnet ist, sowie einen zweiten Rotorhalter 6a, welcher benachbart zum Rotorblechpaket 3 auf einer zweiten, gegenüberliegenden Seite desselben angeordnet ist.

Darüber hinaus umfasst der Rotor 1a einen ersten Wellensicherungsring 7, der in einer ersten Nut der Rotorwelle 2a sitzt und das Rotorblechpaket 3 axial sichert, sowie einen zweiten Wellensicherungsring 8, der in einer zweiten Nut der Rotorwelle 2a sitzt und das Rotorblechpaket 3 axial sichert, wobei die zweite Nut in Bezug auf das Rotorblechpaket 3 gegenüberliegend zur ersten Nut angeordnet ist.

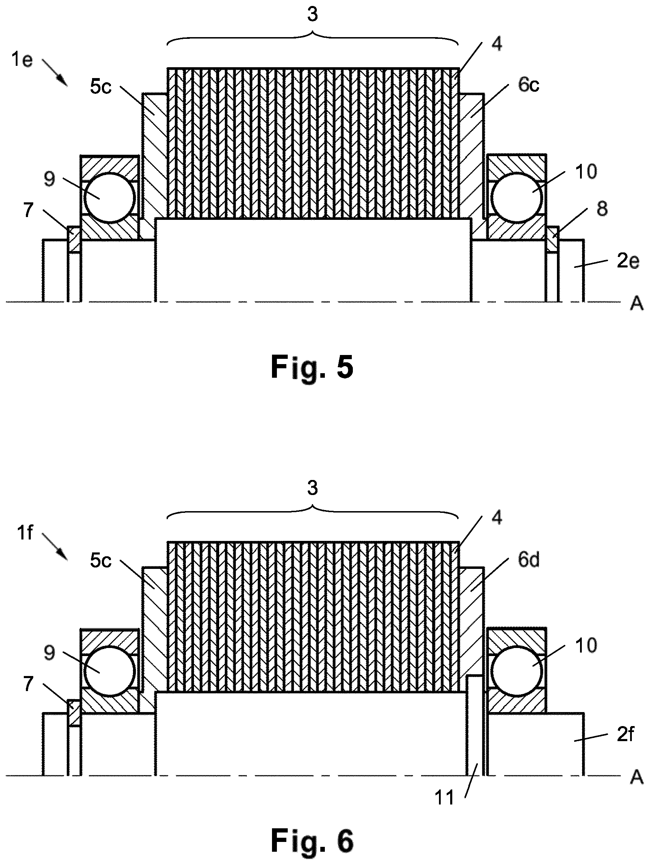

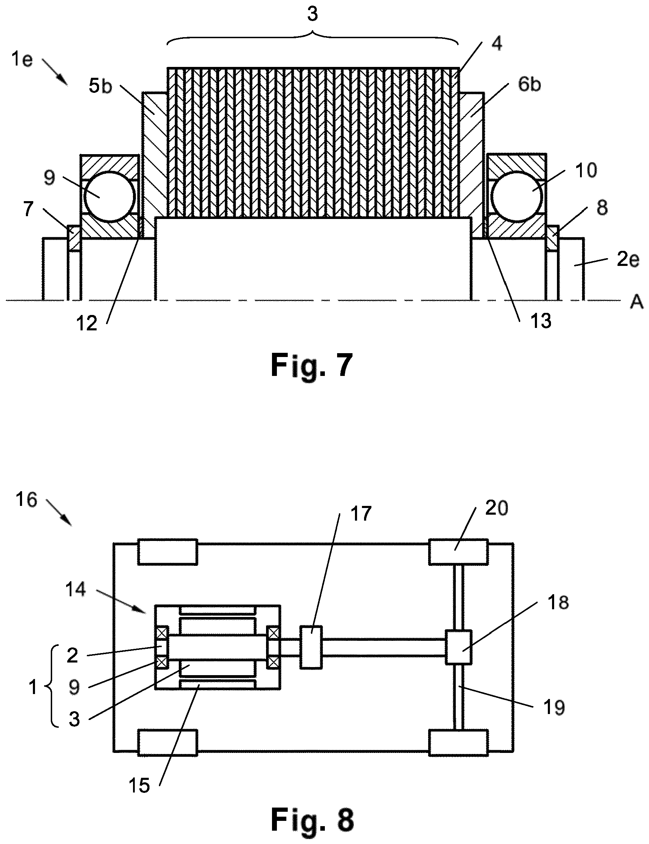

Bei der Montage des Rotorblechpakets 3 auf der Rotorwelle 2a werden die Rotorbleche 4 mit einer Pressvorrichtung aufeinandergedrückt, sodass zwischen den Rotorblechen 3 nach Möglichkeit keine oder nur kleine Luftspalte entstehen. Aufgrund unweigerlicher Abweichungen von der Ebenenform wirken die Rotorbleche 4 als Federpaket. Einem Auffächern wird durch entsprechende Wahl der Presspassung des Rotorblechpakets 3 auf der Rotorwelle 2a entgegengewirkt. Im Betrieb der elektrischen Maschine kann es im Laufe der Zeit dennoch zu einem Auffächern des Rotorblechpakets 3 beziehungsweise zu einem Auseinanderwandern der Rotorbleche 4 kommen. Um dies zu verhindern, weist der vorgeschlagene Rotor 1a den ersten Rotorhalter 5a auf, der mit dem ersten Wellensicherungsring 7 axial gesichert ist, sowie den zweiten Rotorhalter 6a, der mit dem zweiten Wellensicherungsring 8 axial gesichert ist. Somit kann ein Auffächern des Rotorblechpakets 3 beziehungsweise ein Auseinanderwandern der Rotorbleche 4 wirksam vermieden werden. Die beiden Rotorhalter 5a, 6a dienen dabei dazu, die Axialkräfte auch von äußeren Radialbereichen, in denen die Wellensicherungsringe 7, 8 alleine keine Wirkung hätten, abzuleiten. Die Wellensicherungsringe 7, 8 werden allgemein so gewählt, dass sie einerseits die entstehenden Axialkräfte abfangen können, andererseits bei der Nenndrehzahl der elektrischen Maschine nicht abheben, beziehungsweise sich nicht ablösen. Bei dem in Fig. 1 dargestellten Rotor 1a sind der erste Wellensicherungsring 7 und die erste Nut benachbart zum ersten Rotorhalter 5a gegenüberliegend zum Rotorblechpaket 3 und der zweite Wellensicherungsring 8 und die zweite Nut benachbart zum zweiten Rotorhalter 6a gegenüberliegend zum Rotorblechpaket 3 angeordnet. Dies ist jedoch keine zwingende Bedingung (vergleiche auch Fig. 5 und 6). Weiterhin umfasst der Rotor 1a zwei Wälzlager 9, 10 die auf Wellenabsätzen der Rotorwelle 2a sitzen und der drehbar gelagerten Montage des Rotors 1a in einem Stator der elektrischen Maschine dienen (siehe auch Fig. 8). Anstelle der Wälzlager 9, 10 können in diesem Beispiel und in allen folgenden Beispielen grundsätzlich auch Gleitlager eingesetzt werden.

Die Fig. 2 zeigt einen leicht abgewandelten Rotor 1b, welcher dem in der Fig. 1 dargestellten Rotor 1a sehr ähnlich ist und sich dadurch unterscheidet, dass anstelle des zweiten Wellensicherungsrings 8 eine Wellenschulter 11 vorgesehen ist, an der sich der zweite Rotorhalter 6a abstützt. Die Wellenschulter 11 ist auf der Rotorwelle 2b benachbart zum zweiten Rotorhalter 6a und gegenüberliegend zum Rotorblechpaket 3 angeordnet.

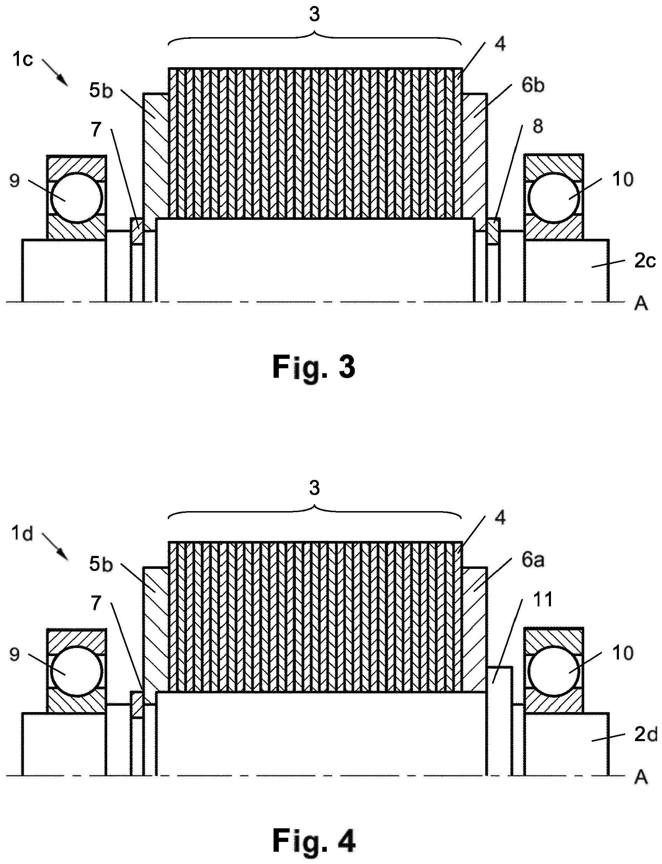

Bei sehr hohen Drehzahlen der elektrischen Maschine kann es vorkommen, dass die Wellensicherungsringe 7, 8 auf dem Wellendurchmesser der Rotorwelle 2c, auf dem das Rotorblechpaket 3 sitzt, abheben beziehungsweise sich ablösen würden. Aus diesem Grund kann es zweckmäßig sein, die Wellensicherungsringe 7, 8 - so wie das in der Fig. 3 dargestellt ist - auf einem weiteren Wellenabsatz der Rotorwelle 2c mit geringerem Durchmesser anzuordnen. Die Abhebedrehzahl wird durch diese Maßnahme angehoben, es ist jedoch darauf zu achten, dass die Wellensicherungsringe 7, 8 die auftretenden Axialkräfte trotz des verkleinerten Durchmessers ableiten können. Weiterhin sind die Rotorhalter 5b, 6b innenseitig leicht abgesetzt, sodass die Wellenbleche 4 sicher auf dem Mittelteil der Rotorwelle 2c sitzen und nicht von diesem herunterrutschen können.

Die Fig. 4 zeigt wiederum einen leicht abgewandelten Rotor 1d, welcher dem in der Fig. 3 dargestellten Rotor 1c sehr ähnlich ist und sich dadurch unterscheidet, dass anstelle des zweiten Wellensicherungsrings 8 eine Wellenschulter 11 vorgesehen ist, an der sich der zweite Rotorhalter 6a abstützt. Die Wellenschulter 11 ist auf der Rotorwelle 2d benachbart zum zweiten Rotorhalter 6a und gegenüberliegend zum Rotorblechpaket 3 angeordnet. Der zweite Rotorhalter 6a braucht in diesem Fall nicht abgesetzt sein.

Fig. 5 zeigt einen Rotor 1e, bei dem die Innenringe der Wälzlager 9, 10 gemeinsam mit dem Rotorblechpaket 3 axial gesichert werden. In diesem Fall ist der Innenring des ersten Wälzlagers 9 benachbart zum ersten Rotorhalter 5c gegenüberliegend zum Rotorblechpaket 3 angeordnet, wobei der erste Wellensicherungsring 7 außenseitig beim Innenring des ersten Wälzlagers 9 angeordnet ist. Gleichermaßen ist der Innenring des zweiten Wälzlagers 10 benachbart zum zweiten Rotorhalter 6c gegenüberliegend zum Rotorblechpaket 3 angeordnet, wobei der zweite Wellensicherungsring 8 außenseitig beim Innenring des zweiten Wälzlagers 10 angeordnet ist. Das zweite Wälzlager 10 ist in Bezug auf das Rotorblechpaket 3 - wie bei den anderen bisher dargestellten Ausführungsformen auch - gegenüberliegend zum ersten Wälzlager 9 angeordnet. Durch die vorgeschlagenen Maßnahmen wird eine Mehrfachfunktion erreicht. Zum einen werden sowohl das Rotorblechpaket 3 als auch die Wälzlager 9, 10 axial gesichert, zum anderen sitzen die Wellensicherungsringe 7, 8 auf relativ kleinen Durchmessern wodurch die Abhebedrehzahl derselben angehoben wird. Außerdem ist diese Bauform besonders kompakt. Da die Innenringe der Wälzlager 9, 10 bei dieser Bauform axial fixiert sind, ist ein eventuell nötiges Loslager über den Außenring eines der Wälzlager 9, 10 zu bewerkstelligen.

Die Fig. 6 zeigt wiederum einen leicht abgewandelten Rotor 1f, welcher dem in der Fig. 5 dargestellten Rotor 1e sehr ähnlich ist und sich dadurch unterscheidet, dass anstelle des zweiten Wellensicherungsrings 8 wiederum eine Wellenschulter 11 vorgesehen ist, an der sich der zweite Rotorhalter 6d abstützt. Die Wellenschulter 11 ist auf der Rotorwelle 2f benachbart zum zweiten Rotorhalter 6d und gegenüberliegend zum Rotorblechpaket 3 angeordnet.

Die Rotorhalter 5c, 6c springen bei den in den Fig. 5 und 6 dargestellten Bauformen an ihren inneren, den Wälzlagern 9, 10 zugewandten, Enden etwas vor, sodass die Außenringe der Wälzlager 9, 10 freigestellt sind und sich frei drehen können. Dies ist zwar vorteilhaft, jedoch keine notwendige Bedingung. Stattdessen kann auch eine erste Distanzscheibe 12 oder Distanzhülse zwischen dem Innenring des ersten Wälzlagers 9 und dem ersten

Rotorhalter 5b und eine zweite Distanzscheibe 13 oder Distanzhülse zwischen dem Innenring des zweiten Wälzlagers 10 und dem zweiten Rotorhalter 6b vorgesehen sein, so wie das in der Fig. 7 dargestellt ist.

Die Fig. 9 zeigt schließlich eine elektrische Maschine 14 mit einem Stator 15 und dem gegenüber dem Stator 15 um die Rotationsachse A und mit Hilfe der Wälzlager 9, 10 drehbar gelagerten Rotor 1. Die elektrische Maschine 14 (d.h. der Elektromotor) ist in diesem Beispiel in ein Fahrzeug 16 eingebaut, das wenigstens zwei Achsen aufweist, von denen wenigstens eine angetrieben ist. Konkret ist der Elektromotor 14 mit einem optionalen Getriebe 17 und einem Differentialgetriebe 18 verbunden. An das Differentialgetriebe 18 schließen die Halbachsen 19 der Hinterachse an. An den Halbachsen 19 sind schließlich die angetriebenen Räder 20 montiert. Der Antrieb des Fahrzeugs 16 erfolgt zumindest teilweise oder zeitweise durch die elektrische Maschine 14. Das heißt, die elektrische Maschine 14 kann zum alleinigen Antrieb des Fahrzeugs 16 dienen oder zum Beispiel im Verbund mit einer Verbrennungskraftmaschine vorgesehen sein (Hybridantrieb).

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### BEZUGSZEICHENLISTE

- 1, 1a..1f: Rotor
- 2, 2a..2f: Rotorwelle
- 3: Rotorblechpaket
- 4: Rotorblech
- 5a..5c: erster Rotorhalter

- 6a..6d: zweiter Rotorhalter
- 7: erster Wellensicherungsring
- 8: zweiter Wellensicherungsring
- 9: erstes Wälzlager
- 10: zweites Wälzlager

- 11: Wellenschulter
- 12: erste Distanzscheibe
- 13: zweite Distanzscheibe
- 14: elektrische Maschine
- 15: Stator

- 16: Fahrzeug
- 17: Getriebe
- 18: Differentialgetriebe
- 19: Halbachse
- 20: Rad

- A: Rotorachse

## Patentansprüche

1. Rotor (1, 1a..1f) für eine elektrische Maschine (14), umfassend
- eine Rotorwelle (2, 2a..2f),
- ein Rotorblechpaket (3), das mit einer Presspassung auf der Rotorwelle (2, 2a..2f) sitzt,
- einen ersten Rotorhalter (5a..5c), welcher benachbart zum Rotorblechpaket (3) auf einer ersten Seite desselben angeordnet ist, und einen zweiten Rotorhalter (6a..6d), welcher benachbart zum Rotorblechpaket (3) auf einer zweiten, gegenüberliegenden Seite desselben angeordnet ist,
**gekennzeichnet durch**
- einen ersten Wellensicherungsring (7), der in einer ersten Nut der Rotorwelle (2, 2a..2f) sitzt und das Rotorblechpaket (3) axial sichert.

2. Rotor (1, 1a..1f) nach Anspruch 1, **gekennzeichnet durch** einen zweiten Wellensicherungsring (8), der in einer zweiten Nut der Rotorwelle (2, 2a..2f) sitzt und das Rotorblechpaket (3) axial sichert, wobei die zweite Nut in Bezug auf das Rotorblechpaket (3) gegenüberliegend zur ersten Nut angeordnet ist.

3. Rotor (1, 1a..1f) nach Anspruch 1, **gekennzeichnet durch** eine Wellenschulter (11) auf der Rotorwelle (2, 2a..2f), welche benachbart zum zweiten Rotorhalter (6a..6d) gegenüberliegend zum Rotorblechpaket (3) angeordnet ist und das Rotorblechpaket (3) axial sichert.

4. Rotor (1, 1a..1f) nach einem der Ansprüche 1 bis 3, **dadurch gekennzeichnet, dass** der erste Wellensicherungsring (7) und die erste Nut benachbart zum ersten Rotorhalter (5a..5c) gegenüberliegend zum Rotorblechpaket (3) angeordnet ist und/oder der zweite Wellensicherungsring (8) und die zweite Nut benachbart zum zweiten Rotorhalter (6a..6d) gegenüberliegend zum Rotorblechpaket (3) angeordnet ist/sind.

5. Rotor (1, 1a..1f) nach einem der Ansprüche 1 bis 4, **dadurch gekennzeichnet, dass** der erste Wellensicherungsring (7) und/oder der zweite Wellensicherungsring (8) auf einem Wellenabsatz der Rotorwelle (2, 2a..2f) angeordnet ist/sind.

6. Rotor (1, 1a..1f) nach einem der Ansprüche 1 bis 5, **gekennzeichnet durch** ein erstes Lager (9), dessen Innenring benachbart zum ersten Rotorhalter (5a..5c) gegenüberliegend zum Rotorblechpaket (3) angeordnet ist, wobei der erste Wellensicherungsring (7) außenseitig beim Innenring des ersten Lagers (9) angeordnet ist.

7. Rotor (1, 1a..1f) nach Anspruch 6, **gekennzeichnet durch** ein zweites Lager (10), dessen Innenring benachbart zum zweiten Rotorhalter (6a..6d) gegenüberliegend zum Rotorblechpaket (3) angeordnet ist, wobei der zweite Wellensicherungsring (8) außenseitig beim Innenring des zweiten Lagers (10) angeordnet ist und wobei das zweite Lager (10) in Bezug auf das Rotorblechpaket (3) gegenüberliegend zum ersten Lager (9) angeordnet ist.

8. Rotor (1, 1a..1f) nach Anspruch 6 oder 7, **gekennzeichnet durch** eine erste Distanzscheibe (12) oder Distanzhülse zwischen dem Innenring des ersten Lagers (9) und dem ersten Rotorhalter (5a..5c) und/oder eine zweite Distanzscheibe (13) oder Distanzhülse zwischen dem Innenring des zweiten Lagers (10) und dem zweiten Rotorhalter (6a..6d).

9. Elektrische Maschine (14) mit einem Stator (15), **gekennzeichnet durch** einen Rotor (1, 1a..1f) nach einem der Ansprüche 1 bis 8, der gegenüber dem Stator (15) um die Rotationsachse (A) des Rotors (1, 1a..1f) drehbar gelagert ist.

10. Fahrzeug (16) mit wenigstens zwei Achsen, von denen wenigstens eine angetrieben ist, **dadurch gekennzeichnet, dass** der besagte Antrieb zumindest teilweise oder zeitweise durch die elektrische Maschine (14) nach Anspruch 9 erfolgt.
